# EUROPÄISCHE PATENTSCHRIFT

(11) **EP 1 912 162 B1**
(45) Veröffentlichungstag und Bekanntmachung des Hinweises auf die Patenterteilung: **29.07.2009**
(21) Anmeldenummer: 06121958.0
(22) Anmeldetag: 09.10.2006
(51) Int. Cl.: G06K 19/077

(54) **RFID-Etikett**
RFID label
Etiquette RFID

(43) Veröffentlichungstag der Anmeldung: 16.04.2008
(73) Patentinhaber: Schreiner Group GmbH & Co. KG, 85764 Oberschleissheim (DE)
(72) Erfinder: Surkau, Reinhard, 82256 Fürstenfeldbruck (DE)
(74) Vertreter: Epping - Hermann - Fischer

(56) Entgegenhaltungen:
- EP-A- 1 630 730
- WO-A2-03/030093
- US-A- 6 147 604
- US-A1- 2002 036 237

## Beschreibung

Die vorliegende Erfindung betrifft ein RFID-Etikett, im speziellen ein derartiges Etikett zur Verklebung auf metallische Untergründe.

RFID-Etiketten sind Etiketten, die mindestens aus einem Substrat (üblicherweise) einer Kunststofffolie oder einer Papierschicht) und einem Inlay sowie einem unterseitigen Klebstoff zur Verklebung auf dem Untergrund bestehen. Inlays sind elektronische Baugruppen, assembliert auf einem Substrat (wiederum üblicherweise einer Folie)und mindestens bestehend aus einer flachen Antenne (üblicherweise einer geätzten oder gedruckten Struktur) und einem Speicherchip.

RFID-Etiketten dienen der Kommunikation mit einer Reader-Einheit, die Signale an die Etiketten aussendet und von diesen empfangen kann.

Die Druckschrift EP 1 630 730 A betrifft einen Transponder, der mit einer Patch-Antenne ohne ausreichende eigene Massefläche ausgebildet ist. Der Transponder wird auf einem metallischen, gegebenenfalls auch lackierten Bestandteil des mit dem Transponder auszustattenden Gegenstands appliziert. Der metallische Bestandteil des Gegenstands bildet dann die Massefläche für die Patch-Antenne des Transponders.

In der Druckschrift US 6,147,604, die den nächesten Stand der Technik darstellt, ist eine Schichtanordnung für einen RFID-Transponder angegeben, bei der eine integrierte Schaltung, die mit einer Antenne verbunden ist in einer Schichtanordnung enthalten ist. Die Antenne und die integrierte Schaltung sind von einer expandierbaren Schicht umgeben, die die Antenne und die integrierte Schaltung von einer Klebeschicht trennt

Von entscheidender Bedeutung für die Lesereichweite von RFID-Etiketten ist deren Verklebungsuntergrund: Bei Verklebung auf metallische Untergründen ist diese Reichweite erheblich gestört beziehungsweise eine Kommunikation mit der Reader-Einheit komplett unmöglich. Zur Umgehung dieses Problems, zum Beispiel bei Hochfrequenz RFID-Etiketten (Systemfrequenz 13,56 MHz), werden zwischen die Antenne des RFID-Etiketts und den Verklebungsuntergrund Abschirmunterlagen, üblicherweise mit weichmagnetischen Materialien wie zum Beispiel Ferriten appliziert. Eine solche technische Lösung ist in der internationalen Veröffentlichung WO 2003/67512 A1 beschrieben.

RFID-Etiketten kommen oft dann zum Einsatz, wenn ein Authentizitätsnachweis von Produkten gefordert wird. Daher ist oftmals vom Anwender gefordert, eine Aufhebung der Funktiönsfähigkeit des RFID-Inlays zu gewährleisten für den Fall, dass das RFID-Etikett unbefugt vom bestimmungsgemäßen Klebegrund mit der Absicht abgezogen wird, es erneut anderswo zu verkleben. Die Lösung hierfür ist eine Art Selbstzerstörungsmechanismus, wie er in DE 20110222 U1 beschrieben ist. Dabei wird die Funktionsfähigkeit der Einheit aus Antenne und Chip durch Unterbrechung einer Kontaktverbindung aufgehoben bzw. der Chip zerstört. Eine solche mechanische Zerstörung erfolgt dadurch, dass Teile des Inlays besonders einfach voneinander zu trennen sind, so dass beim Abziehversuch die Antenne, die Verbindung zwischen Antenne und Chip, ein Kondensatorelement oder andere elektronische Funktionsgruppen oder der Chip in sich zerstört werden.

Eine derartige technische Lösung ist im Bereich der RFID-Etiketten mit darunterliegender Abschirmunterlage nicht realisierbar: Die schwächste Stelle in diesem RFID-Etikett ist die brüchige Ferrit-Abschirmunterlage, die bei einem Ablöseversuch des Etiketts aufgrund einer hohen Füllung an weichmagnetischen Partikeln in sich aufbricht und so das Inlay intakt hinterläßt.

Aufgabe der Erfindung ist es daher, einen Mechanismus bereitzustellen, bei dem ein RFID-Etikett mit Abschirmunterlage vom Untergrund nur unter Aufhebung der Funktionsfähigkeit der RFID-Anordnung abgelöst werden kann.

Die Aufgabe wird erfindungsgemäß gelöst durch ein RFID-Etikett mit Abschirmunterlage gemäß Anspruch 1. Besonders bevorzugte Ausführungsformen sind in den Ansprüchen 2-6 ausgeführt.

Demnach wird ein RFID-Etikett bereitgestellt, bei welchem der oben beschriebene Sicherheitseffekt dadurch doch möglich wird, dass eine Verbindung zwischen Antenne und/oder Chip einerseits und dem Klebeuntergrund andererseits in mindestens einem Teilbereich durch Klebekontakt erfolgt, wobei in diesem Teilbereich keine Abschirmunterlage vorliegt. Dies kann entweder durch eine Aussparung der Abschirmunterlage geschehen oder dadurch, dass die Abschirmunterlage nicht überall bis zum Rand des Etiketts reicht und in diesem Bereich eine direkte Klebeverbindung zwischen Inlay und Untergrund hergestellt wird.

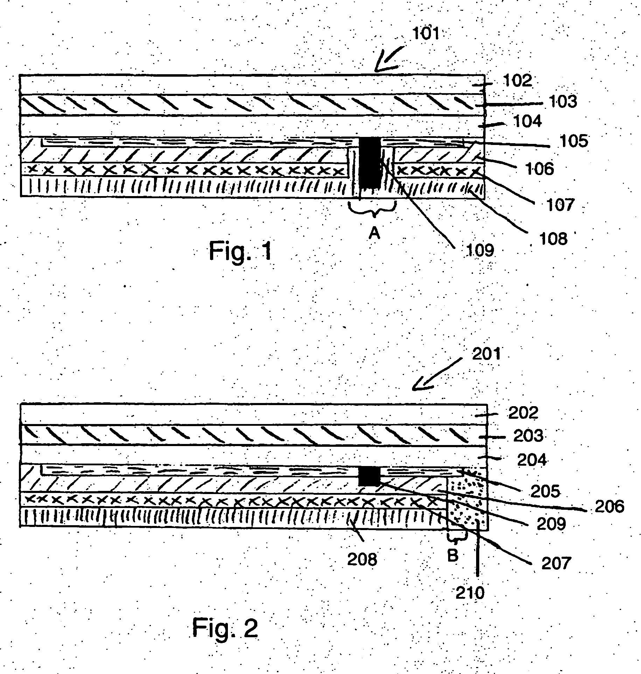

Im Folgenden wird die Erfindung anhand der Figuren 1 und 2 näher erläutert. Dabei zeigen
Figur 1 einen ersten erfindungsgemäßen Aufbau eines RFID-Etiketts in Schnittdarstellung,
Figur 2 einen zweiten erfindungsgemäßen Aufbau eines RFID-Etiketts in Schnittdarstellung.

In Figur 1 ist ein RFID-Etikett 101 gezeigt, bestehend aus einem Substrat 102, einem RFID-Inlay, das wiederum aus einer Folie 104, einer flachen Antenne 105 und einem Chip 109 aufgebaut und mittels einer ersten Klebstoffschicht 103 mit dem Substrat verbunden sind. Über eine zweite Klebstoffschicht 106 ist eine Abschirmunterlage 107 mit der Unterseite des Inlays verbunden. Die Abschirmunterlage 107 weist wiederum eine unterseitige Klebstoffschicht 108 auf.

In einem Bereich A, der hier unterhalb des Chips liegt, ist eine Aussparung der Klebstoffschicht 106 sowie der Abschirmunterlage 107 vorgenommen. In diesem Bereich erstreckt sich die unterseitige Klebstoffschicht 108 vom Untergrund bis zum Chip und teilweise zur Antenne.

Der Effekt beim unerlaubten Ablösen des Etiketts 101 ist das Abtrennen des Chips von der restlichen Antennenstruktur, da der unterseitige Klebstoff 108 so gewählt ist, dass seine Klebkraft stärker ist als die Kraft, die zum Auseinanderreißen des RFID-Aufbaus benötigt wird. Diese Trennwirkung kann sowohl zwischen Chip und Antenne erfolgen wie in Figur 1 vorgesehen, als auch den Chip in sich selbst zerstören oder alternativ die Antenne, wie in Figur 2 gezeigt wird.

Von besonderem Vorteil ist es, das Etikett so aufzubauen, dass eine Zerstörung des RFID-Aufbaus selbst dann erfolgt, wenn eine Manipulation mit Hilfe einen scharfen Klinge erfolgt. Eine Lösung hierzu ist es, den Chip so einzubetten, dass er bis unter die Abschirmunterlage 107 in die unterseitige Klebstoffschicht 108 hineinreicht. Beim Schneiden unterhalb der Abschirmunterlage läuft der Täter Gefahr, den Chip zu zerschneiden und damit wiederum unbrauchbar zu machen.

In Figur 2 ist ein analoger Schichtaufbau zu Figur 1 zu erkennen, mit dem Unterschied, dass anstatt von Aussparungen im Bereich A von Figur 1 nur ein Bereich B vorgesehen ist, der dadurch entsteht, dass die zweite Klebstoffschicht 206, die Abschirmunterlage 207 und der unter der Abschirmunterlage liegende unterseitige Klebstoffschicht 208 nicht ganz bis zum Etikettenrand fortgesetzt sind. Stattdessen greift hier eine Spezial-Klebstoffschicht 210 am Inlay an; hier an der Antenne 204. Bei der Spezialklebstoffschicht 210 handelt es sich vorzugsweise um einen Klebstoff, dessen Klebkraft größer ist als der der unterseitigen Klebstoffschicht 208. Der Vorteil dieser Ausführungsform ist, dass durch die kleinere Dimensionierung der Abschirmunterlage 207 automatisch ein direkter Klebezugang vom Verklebeuntergrund zum Inlay geschaffen ist. Durch die Verwendung eines Spezialklebstoffes 210 kann die Klebkraft in diesem Bereich genau so eingestellt werden, dass der Abreißmechanismus wunschgemäß erfolgt.

## Patentansprüche

1. RFID-Etikett (101, 201) mit einer Oberseite und einer selbstklebenden Unterseite, aufweisend ein Substrat (102, 202), eine Antenne (105, 205), einen Chip (109, 209), eine Abschirmunterlage (107, 207) und eine Klebstoffschicht (108, 208/210) zur Verklebung auf einem Untergrund, wobei die mindestens eine Klebstoffschicht (108, 208/210) die Unterseite des Etiketts definiert, **dadurch gekennzeichnet, dass** die Antenne zwischen dem Substrat (102, 202) und der Abschirmunterlage (107, 207) anbeordnet ist und die Antenne und/oder Chip mindestens in einem Teilbereich (A, B) direkt mit der Unterseite des Etiketts in Klebekontakt steht/stehen.

2. RFID-Etikett gemäß Anspruch 1 **dadurch gekennzeichnet, dass** die Antenne und/oder der Chip mindestens in einem Teilbereich (A, B) entlang einer Grenze der Abschirmunterlage direkt mit der Unterseite des Etiketts in Klebekontakt steht/stehen.

3. RFID-Etikett gemäß Anspruch 2, **dadurch gekennzeichnet, dass** die Grenze der Abschirmunterlage (107, 207) durch eine Aussparung innerhalb dieser Abschirmunterlage gebildet ist.

4. RFID-Etikett gemäß einem der vorangehenden Ansprüche, **dadurch gekennzeichnet, dass** die Haftkraft der Klebstoffschicht (108, 210), durch die der Kontakt zwischen Chip (109, 209) und/oder Antenne (105, 205) mit dem Untergrund hergestellt ist, größer ist als die Kraft, die zum Zerstören
a) der Verbindung zwischen Chip und Antenne und/oder
b) des Chips in sich und/oder
c) der Antenne in sich benötigt wird.

5. RFID-Etikett gemäß einem der vorangehenden Ansprüche, **dadurch gekennzeichnet, dass** der Chip (109, 209) so in das RFID-Etikett integriert ist, dass seine untere, der Etikettenunterseite zugewandte Seite mindestens in den Bereich der Abschirmunterläge (107, 207), in vertikaler Richtung hineinragt.

6. RFID-Etikett gemäß Anspruch 5, **dadurch gekennzeichnet, dass** der Chip so in das RFID-Etikett integriert ist, dass seine untere, der Unterseite des Etiketts zugewandte Seite über die Seite der Abschirmunterlage (107), die der Unterseite des Etiketts zugewandt ist, in vertikaler Richtung hinausreicht.

## Claims

1. An RFID label (101, 201) with an upper side and a self-adhesive underside, having a substrate (102, 202), an antenna (105, 205), a chip (109, 209), a shield layer (107, 207) and an adhesive layer (108, 208/210) for gluing to a substrate, where the minimum of one adhesive layer (108, 208/210) defines the underside of the label, **characterized by** the fact that the antenna is arranged between the substrate (102, 202) and the shield layer (107, 207) and the antenna and/or chip is/are at least in a partial region (A, B) in adhesive contact directly with the underside of the label.

2. An RFID label as in Claim 1, **characterized by** the fact that the antenna and/or the chip is/are in adhesive contact directly with the underside of the label at least in a partial region (A, B) along one edge of the shield layer.

3. An RFID label as in Claim 2, **characterized by** the fact that the edge of the shield layer (107, 207) is formed by an omitted space within this shield layer.

4. An RFID label as in one of the preceding claims, **characterized by** the fact that the adhesive strength of the adhesive layer (108, 210) through which the contact between chip (109, 209) and/or antenna (105, 205) with the substrate is produced, is greater than the force that is required to destroy
a) the connection between chip and antenna, and/or
b) the chip itself, and/or
c) the antenna itself.

5. An RFID label as in one of the preceding claims, **characterized by** the fact that the chip (109, 209) is integrated into the RFID label so that its underside, which is turned toward the underside of the label, rises in the vertical direction at least in the region of the shield layer (107, 207).

6. An RFID label as in Claim 5, **characterized by** the fact that the chip is integrated into the RFID label so that its underside, which is turned toward the underside of the label, extends in the vertical direction beyond the side of the shield layer (107) that is turned toward the underside of the label.

## Revendications

1. Étiquette RFID (101, 201) ayant une face supérieure et une face inférieure autoadhésive, comportant un substrat (102, 202), une Antenne (105, 205), une puce électronique (109, 209), une sous-couche de protection (107, 207) et une couche adhésive (108, 208/210) pour assurer le collage sur un support, dans laquelle l'au moins une couche adhésive (108, 208/210) définit la face inférieure de l'étiquette, **caractérisée en ce que** l'antenne est agencée entre ledit substrat (102, 202) et ladite sous-couche de protection (107, 207) et **en ce que** l'antenne et/ou la puce électronique est en contact adhésif direct avec la face inférieure de l'étiquette au moins sur une zone partielle (A, B).

2. Étiquette RFID selon la revendication 1, **caractérisée en ce que** l'antenne et/ou la puce électronique est en contact adhésif direct avec la face inférieure de l'étiquette au moins sur une zone partielle (A, B) le long d'un bord de la sous-couche de protection.

3. Étiquette RFID selon la revendication 2, **caractérisée en ce que** ledit bord de la sous-couche de protection (107, 207) est constitué par une découpe dans ladite sous-couche de protection.

4. Étiquette RFID selon l'une des revendications précédentes, **caractérisée en ce que** la force adhésive de la couche adhésive (108, 210), qui établit le contact entre la puce électronique (109, 209) et/ou l'antenne (105, 205) avec le support, est supérieure à la force nécessaire pour détruire
a) la liaison entre la puce électronique et l'antenne, et/ou
b) la puce électronique elle-même, et/ou
c) l'antenne elle-même.

5. Étiquette RFID selon l'une des revendications précédentes, **caractérisée en ce que** la puce électronique (109, 209) est intégrée dans l'étiquette RFID de telle manière que sa face inférieure, orientée vers la face inférieure de l'étiquette, dépasse verticalement vers l'intérieur au moins dans la zone de la sous-couche de protection (107, 207).

6. Étiquette RFID selon la revendication 5, **caractérisée en ce que** la puce électronique est intégrée dans l'étiquette RFID de telle manière que sa face inférieure, orientée vers la face inférieure de l'étiquette, dépasse verticalement vers l'extérieur sur le coté de la sous-couche de protection (107), qui est orientée vers la face inférieure de l'étiquette.
